# EUROPEAN PATENT APPLICATION

(11) **EP 4 749 734 A1**
(43) Date of publication of application: **27.05.2026**
(21) Application number: 25213461.4
(22) Date of filing: 04.11.2025
(51) Int. Cl.: H01M 10/04, H01M 50/209, H01M 50/291, H01M 50/293

(54) **INSULATION MEMBER, BATTERY MODULE, AND METHOD OF MANUFACTURING A BATTERY MODULE**

(30) Priority: 22.11.2024 KR 20240168793
(71) Applicant: SAMSUNG SDI CO., LTD., Yongin-si, Gyeonggi-do 17084 (KR)
(72) Inventor: WON, Hee Youn, Yongin-si, Gyeonggi-do 17084 (KR)
(74) Representative: Marks & Clerk LLP

(57) **Abstract**

Disclosed are an insulation member, a battery module, and a method of manufacturing a battery module. The insulation member may include an adiabatic material formed along the outskirts of battery cells and having a space formed therein and a potting liquid filled into the space within the adiabatic material.

## Description

### FIELD

The present disclosure relates to an insulation member, a battery module, and a method of manufacturing a battery module, and more particularly, to an insulation member in which a space within an adiabatic material having a space formed therein is filled with a potting liquid, a battery module, and a method of manufacturing a battery module.

### BACKGROUND

Unlike primary batteries that are not designed to be charged, secondary batteries are designed to be discharged and recharged. Low-capacity secondary batteries are used in small portable electronic devices, such as smart phones, feature phones, notebook computers, digital cameras, and camcorders, while large-capacity secondary batteries are widely used as power sources for driving motors, such as of hybrid vehicles or electric vehicles, and for power storage. The secondary battery includes an electrode assembly consisting of a positive electrode and a negative electrode, a case that accommodates the electrode assembly, a terminal part connected to the electrode assembly, etc.

In a battery module including a plurality of battery cells, an insulation member is inserted between the battery cell and the battery cell. A conventional insulation member is made of a single adiabatic material. The conventional insulation member made of a single adiabatic material as described herein has problems of insufficient performance in preventing heat transfer and limited lifespan, which are required for insulating members.

The herein information disclosed in this Background section is for enhancement of understanding of the background of the present disclosure, and therefore, it may contain information that does not constitute related (or prior) art.

### SUMMARY

Embodiments of the present disclosure are directed to providing an insulation member in which a space within an adiabatic material having a space formed therein is filled with a potting liquid, a battery module, and a method of manufacturing a battery module.

However, the technical problem to be solved by the present disclosure is not limited to the herein problem, and other problems not mentioned herein, and aspects and features of the present disclosure that would address such problems, will be clearly understood by those skilled in the art from the description of the present disclosure herein.

An insulation member according to embodiments of the present disclosure may include an adiabatic material formed along outskirts of battery cells and having a space formed therein and a potting liquid filled into the space within the adiabatic material.

In embodiments, the potting liquid may be hardened after being filled into the space within the adiabatic material in the state in which the battery cells and the adiabatic materials have been stacked and compressed so that the adiabatic material is interposed between a (first) battery cell and a (second) battery cell.

In embodiments, the adiabatic material may have a form in which (a) left, right, and bottom (portions) of the adiabatic material are closed and a top (portion) of the adiabatic material is opened.

In embodiments, the adiabatic material may be formed of polyurethane foam.

In embodiments, the potting liquid may have thermal conductivity of less than 0.2 W/mK.

In embodiments, the potting liquid may include silicon dioxide of 5 to 10 wt%, aluminum hydroxide of 15 to 30 wt%, and polydimethylsiloxane of 60 to 80 wt%.

In embodiments, platinum of less than 0.05 wt% may be added to the potting liquid.

A battery module according to embodiments of the present disclosure may include a plurality of battery cells and an insulation member interposed between a (first) battery cell and a (second) battery cell. The insulation member may include an adiabatic material formed along outskirts of the battery cells and having a space formed therein and a potting liquid filled into the space within the adiabatic material.

In embodiments, the potting liquid may be hardened after being filled into the space within the adiabatic material in the state in which the battery cells and the adiabatic materials have been stacked and compressed so that the adiabatic material is interposed between a (first) battery cell and a (second) battery cell.

In embodiments, the adiabatic material may have a form in which (a) left, right, and bottom (portions) of the adiabatic material are closed and a top (portion) of the adiabatic material is opened.

In embodiments, the adiabatic material may be formed of polyurethane foam.

In embodiments, the potting liquid may have thermal conductivity of less than 0.2 W/mK.

In embodiments, the potting liquid may include silicon dioxide of 5 to 10 wt%, aluminum hydroxide of 15 to 30 wt%, and polydimethylsiloxane of 60 to 80 wt%.

In embodiments, the potting liquid may include platinum of less than 0.05 wt%.

A method of manufacturing a battery module according to embodiments of the present disclosure may include providing a plurality of battery cells, stacking the plurality of battery cells so that the adiabatic material formed along the outskirts of the battery cells and having a space formed therein is interposed between a (first) battery cell and a (second) battery cell, compressing the adiabatic material interposed between the (first) battery cell and the (second) battery cell, and filling a potting liquid into the space within the adiabatic material between the (first) battery cell and the (second) battery cell and hardening the potting liquid.

In embodiments, the stacking of the plurality of battery cells so that the adiabatic material is interposed between the (first) battery cell and the (second) battery cell may include providing the adiabatic material having a form in which (a) left, right, and bottom (portions) of the adiabatic material are closed and a top (portion) of the adiabatic material is opened.

In embodiments, the stacking of the plurality of battery cells so that the adiabatic material is interposed between the (first) battery cell and the (second) battery cell may include providing the adiabatic material formed of polyurethane foam.

In embodiments, the filling and hardening of the potting liquid may include providing the potting liquid having thermal conductivity of less than 0.2 W/mK.

In embodiments, the filling and hardening of the potting liquid may include providing the potting liquid including silicon dioxide of 5 to 10 wt%, aluminum hydroxide of 15 to 30 wt%, and polydimethylsiloxane of 60 to 80 wt%.

In embodiments, the filling and hardening of the potting liquid may include adding platinum of less than 0.05 wt% to the potting liquid.

According to the embodiments of the present disclosure, it is possible to improve performance or lifespan performance that prevents the propagation of heat compared to a conventional insulation member made of a single adiabatic material because the potting liquid is filled into the space within the adiabatic material having the space formed therein.

According to the embodiments of the present disclosure, it is possible to easily form the insulation member in which the space within the adiabatic material has been filled with the potting liquid because the potting liquid is hardened after being filled into the space within the adiabatic material in the state in which the battery cells and the adiabatic materials have been stacked and compressed so that the adiabatic material is interposed between the first battery cell and the second battery cell.

Embodiments of the present disclosure have an advantage in that insulation performance can be achieved and a volume change according to the swelling of a battery cell can also be handled because the potting liquid filled into the space within the adiabatic material is made of a material including silicon.

However, aspects and features of the present disclosure are not limited to those described herein, and other aspects and features not mentioned will be clearly understood by a person skilled in the art from the detailed description, described herein.

At least some of the above and other features of the invention are set out in the claims.

### BRIEF DESCRIPTION OF THE DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:
FIG. 1A is an upper perspective view of an angular secondary battery.
FIG. 1B is a cross-sectional view taken along I-I of FIG. 1A.
FIG. 2A is a perspective view of a conventional battery module.
FIG. 2B is an exploded view of the conventional battery module.
FIGS. 3A and 3B are diagrams illustrating a method of manufacturing a conventional battery module.
FIG. 4 is a diagram illustrating an insulation member according to embodiments of the present disclosure.
FIGS. 5A to 5C are diagrams illustrating a method of manufacturing a battery module including the insulation member according to embodiments of the present disclosure.

### DETAILED DESCRIPTION

Embodiments of the present disclosure will be described herein in detail with reference to the accompanying drawings. Prior to the description, it is noted that the terms or words used in this specification and claims should not be construed as being limited to common or dictionary meanings but instead should be understood to have meanings and concepts in agreement with the present disclosure based on the principle that an inventor can define the concept of each term suitably in order to describe his/her own disclosure in the best way possible. Accordingly, since the embodiments described in this specification and the configurations illustrated in the drawings are only an example of the present disclosure and they do not cover all the technical ideas of the present disclosure, it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

In order to facilitate understanding of the present disclosure, the accompanying drawings are not drawn to scale and the dimensions of some components may be exaggerated. It should be noted that the same reference numerals are designated to the same components in different embodiments.

Reference to two compared elements, features, etc. as being "the same" means that they are "substantially the same". Therefore, the phrase "substantially the same" may include a deviation that is considered low in the art, for example, a deviation of 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed herein may be termed a second element, component, region, layer, or section without departing from the teachings of embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present disclosure and is not intended to limit the present disclosure.

The present disclosure will be described in detail with reference to the attached drawings.

Examples of secondary batteries include a coin type, a cylindrical type, a prismatic type, and a pouch type. The present disclosure is basically applicable to a prismatic secondary battery. Therefore, the prismatic secondary battery will first be briefly described prior to description of embodiments of the present disclosure.

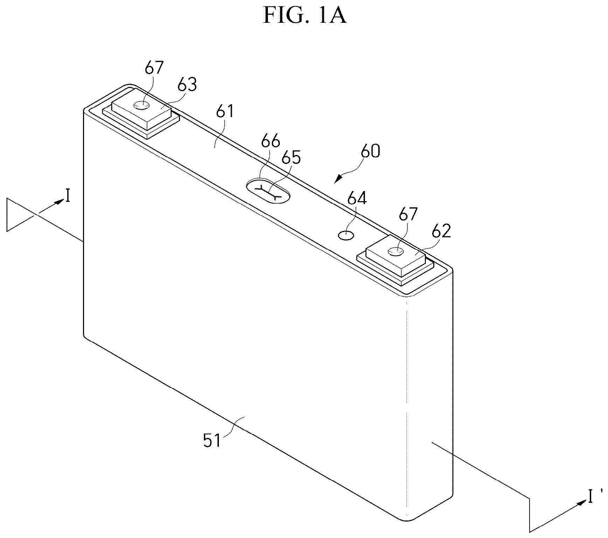

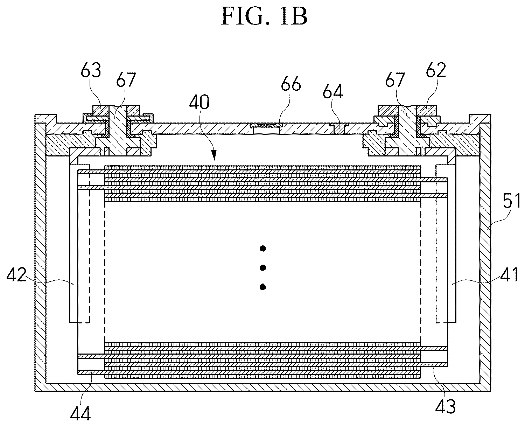

FIG. 1A is a top perspective view of the prismatic secondary battery. FIG. 1B is a cross-sectional view taken along line I-I' of FIG. 1A.

First, the external appearance of the prismatic secondary battery illustrated in FIG. 1A will be described.

A casing 51 defines an overall appearance of the prismatic secondary battery, and may be made of conductive metal, such as aluminum, aluminum alloy, or nickel-plated steel. In addition, the casing 51 may provide a space for accommodating an electrode assembly therein.

A cap assembly 60 may include a cap plate 61 that covers the opening of the casing 51, and the cap assembly 60 and the cap plate 61 may be made of a conductive material. Here, a first terminal 63 and a second terminal 62 may be electrically connected to respective positive and negative (or negative and positive) electrodes inside the casing, and may be installed to protrude outward through the cap plate 61.

The cap plate 61 may be equipped with an electrolyte injection port 64 formed to install a sealing plug, and a vent 66 formed with a notch 65. The vent 66 is for degassing the secondary battery, i.e., for discharging gas generated inside the secondary battery.

With reference to FIG. 1B, the internal structure of the prismatic secondary battery and the coupling structure with the cap assembly 60 will be described.

As illustrated in FIG. 1B, the prismatic secondary battery may basically include an electrode assembly 40, a first current collector part 41, a first terminal 62, a second current collector part 42, a second terminal 63, and a cap assembly 60.

The electrode assembly 40 may be formed by winding or stacking a laminate of a first electrode plate, a separator, and a second electrode plate, which are in the form of a plate or a film. When the electrode assembly 40 is a wound laminate, it may have a winding axis parallel to the longitudinal direction of the casing. The electrode assembly 40 may be of a stack type rather than a winding type, but the shape of the electrode assembly 40 is not limited in the present disclosure. In addition, the electrode assembly 40 may be a Z-stack electrode assembly in which a first electrode plate and a second electrode plate are inserted into both sides of a separator bent into a Z-stack. Furthermore, the electrode assembly 40 may consist of one or more electrode assemblies, which are stacked such that their long sides are adjacent to each other and accommodated in the casing, and the number of electrode assemblies is not limited in the present disclosure. The electrode assembly 40 may have a first electrode plate that acts as a negative electrode and a second electrode plate that acts as a positive electrode, or vice versa.

The first electrode plate may be formed by applying a first electrode active material, such as graphite or carbon, to a first electrode current collector plate made of metal foil, such as copper, copper alloy, nickel, or nickel alloy. The first electrode plate may include a first electrode tab (or first uncoated part) 43, which is a region without application of the first electrode active material. The first electrode tab 43 may act as a current flow passage between the first electrode plate and the first current collector part 41. In some examples, the first electrode tab 43 may be formed by cutting the first electrode plate to protrude to one side in advance when manufacturing the first electrode plate, and may protrude further to one side than the separator without separate cutting.

The second electrode plate may be formed by applying a second electrode active material such as transition metal oxide to a substrate made of metal foil, such as aluminum or aluminum alloy. The second electrode plate may include a second electrode tab (or second uncoated part) 44, which is a region without application of the second electrode active material. The second electrode tab 44 may act as a current flow passage between the second electrode plate and the second current collector part 42. In some examples, the second electrode tab 44 may be formed by cutting the second electrode plate to protrude to the other side in advance when manufacturing the second electrode plate, and may protrude further to the other side than the separator without separate cutting.

In some embodiments, the first electrode tab 43 may be located on the right end side of the electrode assembly 40, and the second electrode tab 44 may be located on the left end side of the electrode assembly 40. Alternatively, the first electrode tab 43 and the second electrode tab 44 may be located on one end side of the electrode assembly 40 in the same direction. Here, the left and the right are represented based on the secondary battery illustrated in FIG. 1 for convenience of explanation, and they may change in position when the secondary battery is rotated left and right or up and down.

The separator functions to prevent a short circuit between the first electrode plate and the second electrode plate while permitting migration of lithium ions therebetween. The separator may be made of, for example, a polyethylene film, a polypropylene film, a polyethylene-polypropylene film, or the like.

The first electrode tab 43 of the first electrode plate and the second electrode tab 44 of the second electrode plate extend from both ends of the electrode assembly 40 as described herein, respectively. In some embodiments, the electrode assembly 40 may be accommodated together with an electrolyte in the casing 51.

In the electrode assembly 40, the first current collector part 41 and the second current collector part 42 may be welded and connected to the first electrode tab 43 extending from the first electrode plate and the second electrode tab 44 extending from the second electrode plate, respectively.

The first current collector part 41 and the second current collector part 42 are connected to the first terminal 62 and the second terminal 63, as described with reference to FIG. 1A, through terminal pins 67, respectively. In some embodiments, the terminal pins 67 may each have an outer peripheral surface that is threaded, and may be fastened to the first terminal 62 and the second terminal 63 by screwing. However, the present disclosure is not limited thereto. For example, the terminal pins 67 may also be coupled to the first terminal 62 and the second terminal 63 by riveting or welding.

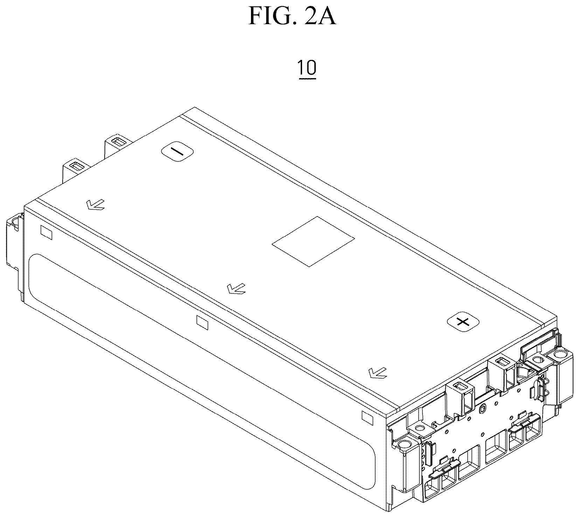

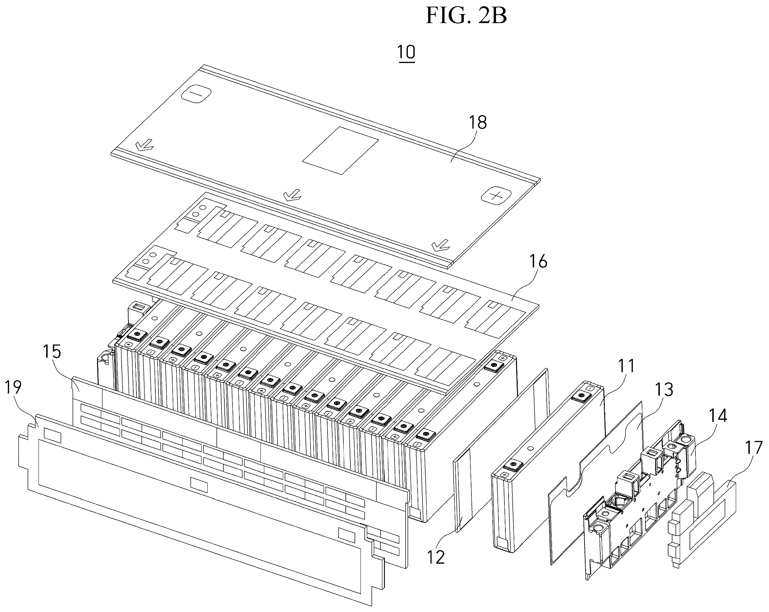

FIG. 2A is a perspective view of a conventional battery module. FIG. 2B is an exploded view of the conventional battery module.

Referring to FIGS. 2A and 2B, the conventional battery module 10 may include a plurality of battery cells 11, an insulation member 12, an end insulation member 13, an end plate 14, a side insulation member 15, a bus bar assembly 16, a cell management controller (CMC) 17, an upper cover 18, and a side plate 19.

The plurality of battery cells 11 may each be the angular secondary battery cell described with reference to FIGS. 1A and 1B.

The insulation member 12 may be provided between the plurality of battery cells 11, and can prevent a current from flowing or heat from being delivered between the plurality of battery cells 11.

The end insulation member 13 may be provided between the battery cell 11 at the outermost part, among the plurality of battery cells 11, and the end plate 14, and can prevent a current from flowing from the battery cell 11 at the outermost part to the outside or heat from being delivered from the battery cell 11 at the outermost part to the outside.

The end plate 14 may be provided outside the battery cell 11 at the outermost part, and may play a role of protecting the plurality of battery cells 11.

The side insulation member 15 may be provided on the side of the plurality of battery cells 11, and can prevent a current from flowing to the outside or heat from being delivered to the outside through the side of the plurality of battery cells 11.

The bus bar assembly 16 may form an electrical connection between the plurality of battery cells 11 in order to satisfy a capacity required for the battery module 10.

The CMC 17 may monitor and control the current, voltage, or temperature of each of the plurality of battery cells 11 included in the battery module 10.

The upper cover 18 and the side plate 19 may be provided over the plurality of battery cells 11 and on the side of the plurality of battery cells 11, respectively, and may play a role of protecting the plurality of battery cells 11.

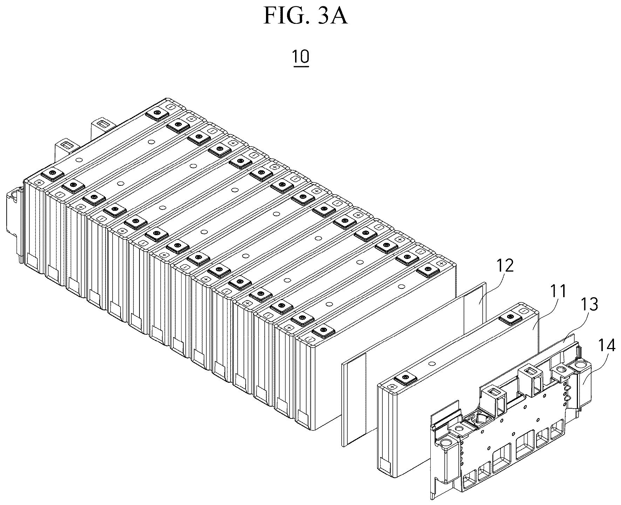

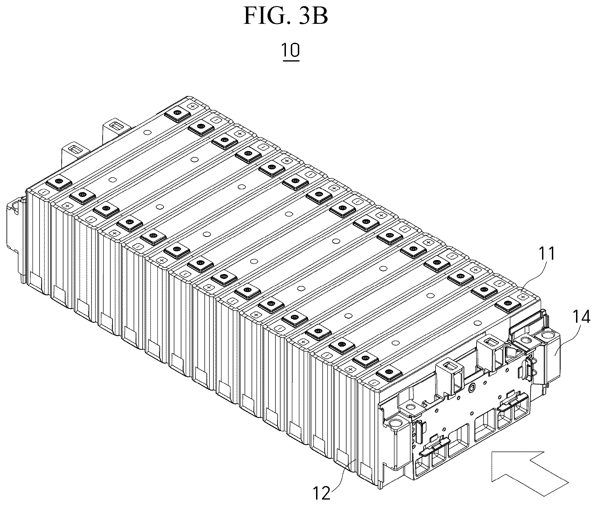

FIGS. 3A and 3B are diagrams illustrating a method of manufacturing a conventional battery module.

Referring to FIGS. 3A and 3B, first, as illustrated in FIG. 3A, in the method of manufacturing the conventional battery module 10, when the plurality of battery cells 11 is stacked, the plurality of battery cells may be stacked by attaching the insulation member 12 between the battery cell and the battery cell. The end insulation member 13 and the end plate 14 may be provided outside the battery cell 11 at the outermost part, among the plurality of battery cells 11.

Thereafter, as illustrated in FIG. 3B, the plurality of stacked battery cells 11, the insulation member 12 provided between the battery cell and the battery cell, the end insulation member 13, and the end plate 14 may be compressed together. Thereafter, the battery module 10 may be completed by additionally assembling the side insulation member 15, the bus bar assembly 16, the CMC 17, the upper cover 18, and the side plate 19.

The insulation member 12 that is used in the conventional battery module 10 has problems of insufficient performance in preventing heat transfer and limited lifespan, which are required for insulating members, because the insulation member is made of a single adiabatic material.

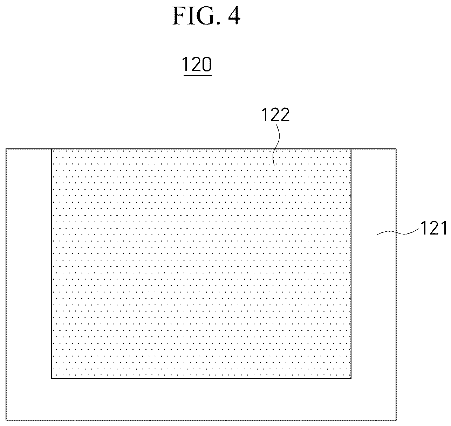

FIG. 4 is a diagram illustrating an insulation member according to embodiments of the present disclosure.

Referring to FIG. 4, an insulation member 120 according to embodiments of the present disclosure may include an adiabatic material 121 and a potting liquid 122.

The insulation member 120 may be interposed between battery cells included in a battery module.

The adiabatic material 121 may be formed along the outskirts of the battery cell, and may have a space formed therein. In embodiments, as illustrated in FIG. 4, the adiabatic material 121 may have a form in which the left, right, and bottom of the adiabatic material are closed and the top of the adiabatic material is opened. The adiabatic material 121 has such a form, which can enable the potting liquid 122 to be easily filled from the top of the plurality of battery cells. In embodiments, the adiabatic material 121 may be formed of polyurethane foam.

The potting liquid 122 may be filled into the space within the adiabatic material 121. In embodiments, the potting liquid 122 may be hardened after being filled into the space within the adiabatic material 121 in the state in which the battery cells and the adiabatic materials have been stacked and compressed so that the adiabatic material 121 is interposed between the battery cell and the battery cell. In embodiments, the potting liquid 122 may be made of a material having relatively low thermal conductivity compared to the adiabatic material 121, thereby effectively preventing the propagation of heat between a plurality of battery cells. For example, the potting liquid 122 may have thermal conductivity of less than 0.2 W/mK.

In embodiments, the potting liquid 122 may include silicon dioxide of 5 to 10 wt%, aluminum hydroxide of 15 to 30 wt%, and polydimethylsiloxane of 60 to 80 wt%. The potting liquid 122 filled into the space within the adiabatic material 121 may be made of a material including silicon. Accordingly, there are advantages in that insulation performance can be achieved and a volume change according to the swelling of a battery cell can also be handled. In another embodiment, platinum of less than 0.05 wt% may be added to the potting liquid 122.

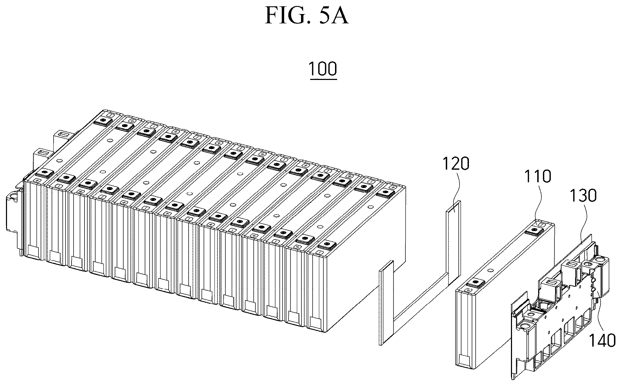

A method of manufacturing the battery module 100 including the insulation member 120 having the structure illustrated in FIG. 4 is described in detail with reference to FIGS. 5A to 5C.

FIGS. 5A to 5C are diagrams illustrating a method of manufacturing the battery module including the insulation member according to embodiments of the present disclosure.

Referring to FIGS. 5A to 5C, first, as illustrated in FIG. 5A, in the method of manufacturing the battery module 100 according to embodiments of the present disclosure, when a plurality of battery cells 110 is stacked, the plurality of battery cells may be stacked by attaching the adiabatic material 121 between the battery cell and the battery cell. An end insulation member 130 and an end plate 140 may be provided outside the battery cell 110 at the outermost part, among the plurality of battery cells 110. In this case, as illustrated in FIG. 5A, the adiabatic material 121 may have a form in which the left, right, and bottom of the adiabatic material are closed and the top of the adiabatic material is opened.

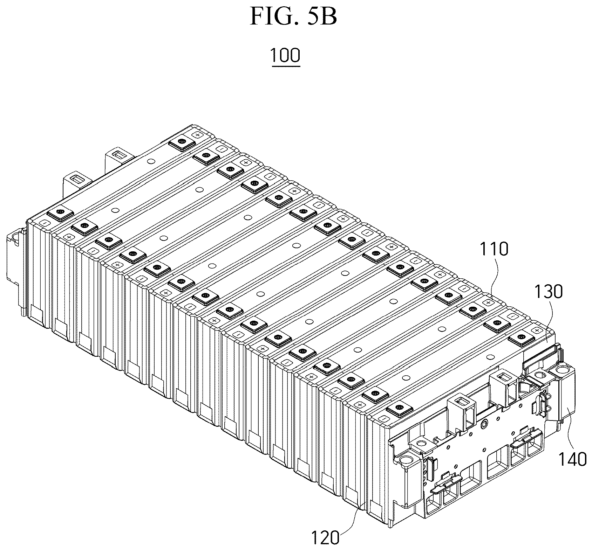

Furthermore, as illustrated in FIG. 5B, the plurality of stacked battery cells 110, the adiabatic material 121 provided between the battery cell and the battery cell, the end insulation member 130, and the end plate 140 may be compressed together.

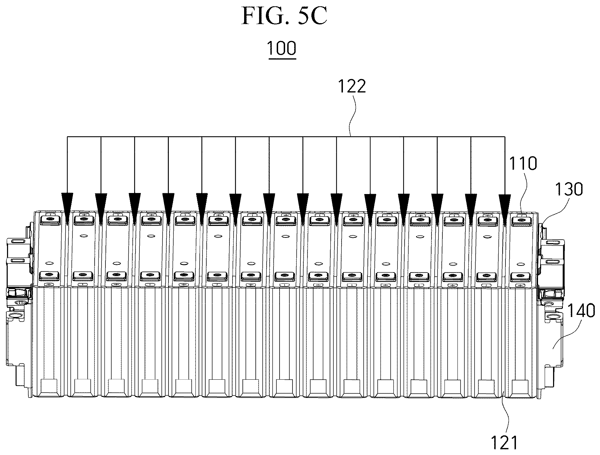

Thereafter, as illustrated in FIG. 5C, the potting liquid 122 may be hardened after being filled into the space within the adiabatic material 121 in the state in which the battery cells and the adiabatic materials have been stacked and compressed so that the adiabatic material 121 is interposed between the battery cell and the battery cell.

As described herein, according to the method of manufacturing the battery module 100 including the insulation member 120 according to embodiments of the present disclosure, the insulation member 120 in which the potting liquid 122 has been filled into the space within the adiabatic material 121 as illustrated in FIG. 4 can be easily formed because the potting liquid 122 is hardened after being filled into the space within the adiabatic material 121 in the state in which the battery cells and the adiabatic materials have been stacked and compressed so that the adiabatic material 121 is interposed between the battery cell and the battery cell.

Thereafter, according to the method of manufacturing the battery module 100 including the insulation member 120 according to embodiments of the present disclosure, the battery module 100 may be completed by additionally assembling a side insulation member, a bus bar assembly, a CMC, an upper cover, and a side plate.

Hereinafter, materials which may be used in a secondary battery according to an embodiment of the present disclosure are described.

A compound (e.g., a lithiated intercalation compound) capable of reversible intercalation and deintercalation of lithium may be used as a positive electrode active material. Specifically, one type or more selected among complex oxides of metal, selected among cobalt, manganese, nickel, and a combination of them, and lithium may be used as the positive electrode active material.

The complex oxide may be lithium transition metal complex oxide. A detailed example of the complex oxide may include lithium nickel-based oxide, lithium cobalt-based oxide, lithium manganese-based oxide, a lithium ferrous phosphate-based compound, cobalt-free nickel-manganese-based oxide, or a combination of them.

For example, a compound that is represented as one of the following chemical formulas may be used. LiₐA_{1-b}X_{b}O_{2-c}D_{c} (0.90≤a≤1.8, 0≤b≤0.5, 0≤c≤0.05) ; LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0. 90≤a≤1.8, 0≤b≤0.5, 0≤c≤0.5, 0<α<2) ; LiₐNi_{b}Co_{c}L¹_{d}GₑO₂ (0. 90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0. 90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0. 5) ; Li_{(3-f)}Fe₂(PO₄)₃ (0≤f≤2); and LiₐFePO₄ (0.90≤a≤1.8).

In the chemical formula, A may be Ni, Co, Mn, or a combination of them. X may be Al, Ni, Co, Mn, Cr, Fe, Mg, Sr, V, a rare earth element, or a combination of them; D may be O, F, S, P, or a combination of them. G may be Al, Cr, Mn, Fe, Mg, La, Ce, Sr, V, or a combination of them. L¹ may be Mn, Al, or a combination of them.

A positive electrode for a lithium secondary battery may include a current collector and a positive electrode active material layer formed on the current collector. The positive electrode active material layer may include the positive electrode active material, and may further include a binder and/or a conductive material.

Content of the positive electrode active material may be 90 wt.% to 99.5 wt.% with respect to the positive electrode active material layer 100 wt.%. Content of the binder and the conductive material may be 0.5 wt.% to 5 wt.% with respect to the positive electrode active material layer 100 wt.%.

Al may be used as the current collector, but the present disclosure may not be limited thereto.

A negative electrode active material may include a material capable of reversibly Intercalation/deintercalation with respect to lithium ions, lithium metal, an alloy of lithium metal, a material capable of doping and dedoping with respect to lithium, or transition metal oxide.

The material capable of reversibly Intercalation/deintercalation with respect to lithium ions may include a carbon-based negative electrode active material, for example, crystalline carbon, amorphous carbon, or a combination of them. An example of the crystalline carbon may include graphite, such as natural graphite or synthetic graphite. Examples of the amorphous carbon may include soft or hard carbon, mesophase pitch carbide, and fired coke.

An Si-based negative electrode active material or an Sn-based negative electrode active material may be used as the material capable of doping and dedoping with respect to lithium. The Si-based negative electrode active material may be silicon, a silicon-carbon composite, SiOₓ (0<x<2), a Si-based alloy, or a combination of them.

The silicon-carbon composite may be a composite of silicon and amorphous carbon. According to an implementation example, the silicon-carbon composite may include silicon particles, and may have a form in which amorphous carbon has been coated on surfaces of silicon particles.

The silicon-carbon composite may further include crystalline carbon. For example, the silicon-carbon composite may include a core including crystalline carbon and silicon particles, and an amorphous carbon coating layer disposed on a surface of the core.

A negative electrode for a lithium secondary battery may include a current collector and a negative electrode active material layer disposed on the current collector. The negative electrode active material layer may include the negative electrode active material, and may further include a binder and/or a conductive material.

For example the negative electrode active material layer may include the negative electrode active material of 90 wt.% to 99 wt.%, the binder of 0.5 wt.% to 5 wt.%, and the conductive material of 0 wt.% to 5 wt.%.

A nonaqueous-based binder, an aqueous-based binder, a dry binder, or a combination of them may be used as the binder. If the aqueous-based binder is used as a binder for the negative electrode, the binder for the negative electrode may further include a cellulose-series compound capable of assigning viscosity.

One selected among nickel foil, stainless steel foil, titanium foil, nickel foam, copper foam, a polymer base on which a conductive metal has been coated, and a combination of them may be used as a current collector for the negative electrode.

An electrolyte for a lithium secondary battery may include a nonaqueous organic solvent and lithium salts.

The nonaqueous organic solvent may play a role as a medium through which ions that are involved in an electrochemical reaction of a battery can move.

The nonaqueous organic solvent may be a carbonate-based, ester-based, ether-based, ketone-based, or alcohol-based solvent, an aprotic solvent, or a combination of them. The carbonate-based, ester-based, ether-based, ketone-based, or alcohol-based solvent, or the aprotic solvent may be used solely, or two types or more of them may be mixed and used as the nonaqueous organic solvent.

Furthermore, if the carbonate-based solvent is used, annular carbonate and chain carbonate may be mixed and used.

A separator may be present between the positive electrode and the negative electrode depending on the type of lithium secondary battery. Polyethylene, polypropylene, and polyvinylidene fluoride, or a multi-layer having two or more layers of them may be used as the separator.

The separator may include a porous base, and a coating layer including an organic matter, an inorganic matter, or a combination of them that is disposed on one or both sides of the porous base.

The organic matter may include a polyvinylidene fluoride-based heavy antibody or (meth)acrylic polymer.

The inorganic matter may include inorganic particles selected among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination of them, but the present disclosure is not limited thereto.

The organic matter and the inorganic matter may have a form in which the organic matter and the inorganic matter have been mixed in one coating layer or a form in which a coating layer including the organic matter and a coating layer including the inorganic matter have been stacked.

## Claims

1. An insulation member interposed between battery cells, the insulation member comprising:
an adiabatic material formed along outskirts of the battery cells and having a space formed therein; and
a potting liquid filled into the space within the adiabatic material.

2. The insulation member as claimed in claim 1, wherein the potting liquid is hardened after being filled into the space within the adiabatic material in a state in which the battery cells and the adiabatic material have been stacked and compressed so that the adiabatic material is interposed between a first battery cell and a second battery cell.

3. The insulation member as claimed in claim 1 or claim 2, wherein the adiabatic material has a form in which left, right, and bottom portions of the adiabatic material are closed and a top portion of the adiabatic material is opened.

4. The insulation member as claimed in any preceding claim, wherein
(A) the adiabatic material is formed of polyurethane foam; and/or
(B) the potting liquid has thermal conductivity of less than 0.2 W/mK.

5. The insulation member as claimed in any preceding claim, wherein the potting liquid comprises silicon dioxide of 5 to 10 wt%, aluminum hydroxide of 15 to 30 wt%, and polydimethylsiloxane of 60 to 80 wt%; and, optionally, wherein platinum of less than 0.05 wt% is added to the potting liquid.

6. A battery module comprising:
a plurality of battery cells; and
an insulation member interposed between a first battery cell and a second battery cell,
wherein the insulation member comprises:
an adiabatic material formed along outskirts of the battery cells and having a space formed therein; and
a potting liquid filled into the space within the adiabatic material.

7. The battery module as claimed in claim 6, wherein the potting liquid is hardened after being filled into the space within the adiabatic material in a state in which the battery cells and the adiabatic material have been stacked and compressed so that the adiabatic material is interposed between the first battery cell and the second battery cell.

8. The battery module as claimed in claim 6 or claim 7, wherein the adiabatic material has a form in which left, right, and bottom portions of the adiabatic material are closed and a top portion of the adiabatic material is opened.

9. The battery module as claimed in any of claims 6 8, wherein
(A) the adiabatic material is formed of polyurethane foam; and/or
(B) the potting liquid has thermal conductivity of less than 0.2 W/mK.

10. The battery module as claimed in any of claims 6 to 9, wherein the potting liquid comprises silicon dioxide of 5 to 10 wt%, aluminum hydroxide of 15 to 30 wt%, and polydimethylsiloxane of 60 to 80 wt%; and, optionally, wherein the potting liquid comprises platinum of less than 0.05 wt%.

11. A method of manufacturing a battery module, comprising:
providing a plurality of battery cells;
stacking the plurality of battery cells so that the adiabatic material formed along outskirts of the battery cells and
having a space formed therein is interposed between a first battery cell and a second battery cell;
compressing the adiabatic material interposed between the first battery cell and the second battery cell; and
filling a potting liquid into the space within the adiabatic material between the first battery cell and the second battery cell and hardening the potting liquid.

12. The method as claimed in claim 11, wherein the stacking of the plurality of battery cells so that the adiabatic material is interposed between the first battery cell and the second battery cell comprises providing the adiabatic material having a form in which left, right, and bottom portions of the adiabatic material are closed and a top portion of the adiabatic material is opened.

13. The method as claimed in claim 11 or claim 12, wherein the stacking of the plurality of battery cells so that the adiabatic material is interposed between the first battery cell and the second battery cell comprises providing the adiabatic material formed of polyurethane foam.

14. The method as claimed in any of claims 11 to 13, wherein the filling and hardening of the potting liquid comprises providing the potting liquid having thermal conductivity of less than 0.2 W/mK.

15. The method as claimed in claim 15, wherein
(A) the filling and hardening of the potting liquid comprises providing the potting liquid comprising silicon dioxide of 5 to 10 wt%, aluminum hydroxide of 15 to 30 wt%, and polydimethylsiloxane of 60 to 80 wt%;
and/or
(B) the filling and hardening of the potting liquid comprises adding platinum of less than 0.05 wt% to the potting liquid.
